# EUROPÄISCHE PATENTSCHRIFT

(11) **EP 1 919 018 B1**
(45) Veröffentlichungstag und Bekanntmachung des Hinweises auf die Patenterteilung: **03.11.2010**
(21) Anmeldenummer: 07113894.5
(22) Anmeldetag: 07.08.2007
(51) Int. Cl.: H01M 8/04, H01M 8/06, H01M 8/00

(54) **Brennstoffzellensystem**
Fuel cell system
Système de pile à combustible

(30) Priorität: 28.09.2006 DE 102006046257
(43) Veröffentlichungstag der Anmeldung: 07.05.2008
(73) Patentinhaber: J. Eberspächer GmbH & Co. KG, 73730 Esslingen (DE)
(72) Erfinder: Kaupert, Andreas, 73730, Esslingen (DE); Eberspach, Günter, 72649, Wolfschlugen (DE)
(74) Vertreter: BRP Renaud & Partner

(56) Entgegenhaltungen:
- EP-A- 1 124 275
- EP-A- 1 205 991
- EP-A- 1 845 576
- WO-A-00/39877
- DE-A1- 4 446 841
- US-A1- 2002 081 470
- US-A1- 2005 112 431
- US-B1- 6 348 278

## Beschreibung

Die vorliegende Erfindung betrifft ein Brennstoffzellensystem, insbesondere in einem Kraftfahrzeug, mit den Merkmalen des Oberbegriffs des Anspruchs 1. Die Erfindung betrifft außerdem einen Restgasbrenner für ein derartiges Brennstoffzellensystem.

Aus der DE 10 2004 033 545 A1 ist ein Restgasbrenner für ein Brennstoffzellensystem bekannt, der stromab der Brennstoffzelle angeordnet ist. Die Brennstoffzelle dient zum Generieren von elektrischem Strom aus wasserstoffhaltigem Anodengas und sauerstoffhaltigem Kathodengas. Der Restgasbrenner dient zum Verbrennen von wasserstoffhaltigem Anodenabgas und sauerstoffhaltigem Kathodenabgas. Mit Hilfe des Restgasbrenners wird somit versucht, eine Emission von Wasserstoff und Kohlenmonoxid in die Umgebung zu verhindern. Gleichzeitig soll durch die Umsetzung des im Anodenabgas enthaltenen Wasserstoffs und Kohlenmonoxids eine Verbesserung des Gesamtwirkungsgrads des Brennstoffzellensystems erreicht werden.

Aus der EP 1 845 576 A2 ist ein Brennstoffzellensystem der eingangs genannten Art bekannt. Es weist eine Brennstoffzelle zum Generieren von elektrischem Strom aus wasserstoffhaltigem Anodengas und sauerstoffhaltigem Kathodengas sowie einen stromab der Brennstoffzelle angeordneten Restgasbrenner zum Verbrennen von wasserstoffhaltigem Anodenabgas mit sauerstoffhaltigem Anodenabgas auf. Beim bekannten Brennstoffzellensystem enthält der Restgasbrenner einen Brennraum, in dem im Betrieb des Brennstoffzellensystems die Verbrennung von Anodenabgas mit Kathodenabgas stattfindet. Ferner umfasst das bekannte Brennstoffzellensystem einen Oxidationskatalysator zur Reduzierung von Schadstoffemissionen. Dieser ist beim bekannten Brennstoffzellensystem stromab des Restgasbrenners und somit außerhalb des Restgasbrenners angeordnet.

Aus der EP 1 124 275 A2, aus der US 2005/0112,431 A1, aus der EP 1 205 991 A2 und aus der DE 44 46 841 A1 ist jeweils ein Brennstoffzellensystem bekannt, das einen katalytisch arbeitenden Restgasbrenner stromab einer Brennstoffzelle aufweist. Ein derartiger katalytischer Restgasbrenner enthält einen Katalysator, in dem das Anodenabgas und das Kathodenabgas katalytisch umgesetzt werden.

As der WO 2000/39877 A1 ist ein Brennstoffzellensystem bekannt, bei dem einer Brennstoffzelle ein Katalysator nachgeordnet ist. Dieser kann als Restgasbrenner wirken und Anodenabgas mit Kathodenabgas umsetzen.

Weitere Brennstoffzellensysteme sind z.B. aus der US 6,348,278 B1 und aus der US 2002/0081470 A1 bekannt.

Die vorliegende Erfindung beschäftigt sich mit dem Problem, für ein Brennstoffzellensystem bzw. für einen Restgasbrenner der eingangs genannten Art eine verbesserte Ausführungsform anzugeben, die sich insbesondere durch reduzierte Schadstoffemissionen auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, in den Restgasbrenner einen Oxidationskatalysator zu integrieren. Durch den Einsatz eines derartigen Oxidationskatalysators kann der Schadstoffanteil im Brennerabgas reduziert werden. Zusätzlich ergibt sich für das Brennstoffzellensystem eine kompakte Bauform, da der Oxidationskatalysator in den Restgasbrenner eingebaut ist und diesbezüglich kein separat anzuordnendes Bauteil bildet. Insbesondere können im Oxidationskatalysator ggf. noch in der Gasströmung enthaltene Restmengen an Kohlenwasserstoffen umgesetzt werden.

Der Oxidationskatalysator ist dabei erfindungsgemäß stromab eines Brennraums des Restgasbrenners angeordnet, in dem die Verbrennung von Anodenabgas und Kathodenabgas stattfindet, und ist so ausgestaltet, dass im Oxidationskatalysator eine Umsetzung von im Verbrennungsabgas des Brennraums enthaltenen Kohlenmonoxid in Kohlendioxid erfolgt. Bei dieser Ausführungsform kann somit die Kohlenmonoxidemission erheblich reduziert werden. Diese Ausführungsform ist von besonderem Vorteil für Brennstoffzellen, die als Hochtemperatur-Brennstoffzellen ausgestaltet sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

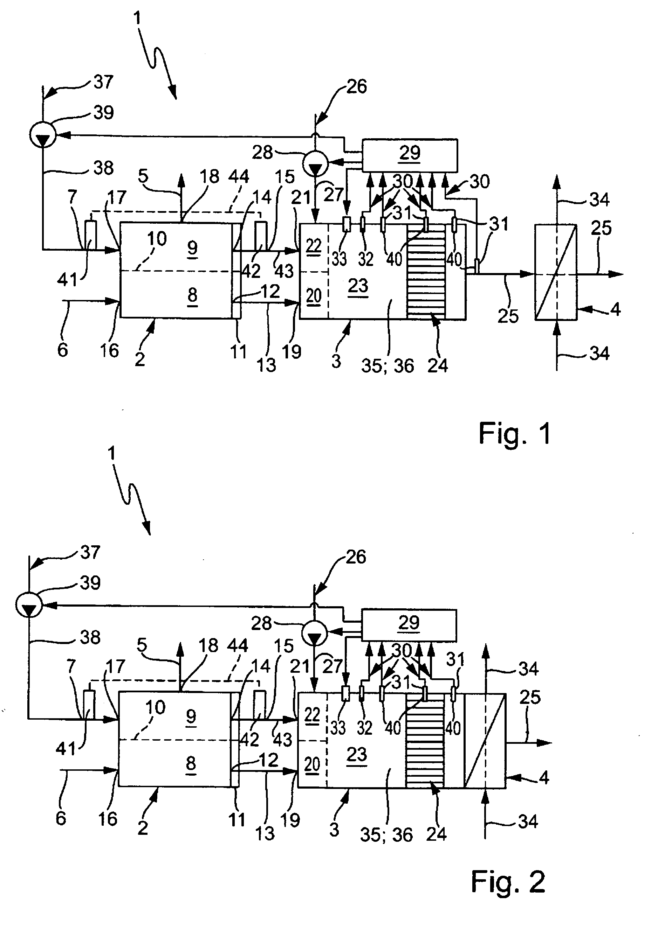

- Fig. 1 bis 4: jeweils eine stark vereinfachte, schaltplanartige Prinzipdarstellung eines Brennstoffzellensystems bei verschiedenen Ausführungsformen.

Entsprechend den Fig. 1 bis 4 umfasst ein Brennstoffzellensystem 1 zumindest eine Brennstoffzelle 2 und einen Restgasbrenner 3. Des Weiteren kann das Brennstoffzellensystem 1 zumindest einen Wärmeübertrager 4 aufweisen. Außerdem kann das Brennstoffzellensystem 1 in üblicher Weise weitere Komponenten umfassen, wie z.B. einen Reformer zum Generieren von wasserstoffhaltigem Anodengas aus einem Kohlenwasserstoff-Brennstoff sowie wenigstens einen weiteren Wärmeübertrager. Das Brennstoffzellensystem 1 kommt vorzugsweise in einem Kraftfahrzeug, insbesondere in einem Nutzfahrzeug, zur Anwendung und kann dort als zusätzliche Stromquelle verwendet werden, die unabhängig von einer Brennkraftmaschine des Fahrzeugs arbeitet. Beispielsweise kann mit Hilfe des Brennstoffzellensystems 1 bei ausgeschalteter Brennkraftmaschine eine Klimaanlage des Fahrzeugs betrieben werden. Ebenso kann die gesamte Stromversorgung des Fahrzeugs mit dem Brennstoffzellensystem 1 realisiert werden.

Die Brennstoffzelle 2 dient zum Generieren von elektrischem Strom 5 aus wasserstoffhaltigem Anodengas 6 und sauerstoffhaltigem Kathodengas 7. Hierzu enthält die Brennstoffzelle 2 eine Anodenseite 8 und eine Kathodenseite 9, die in der Regel durch einen Elektrolyt 10 voneinander getrennt sind. Mit Hilfe des Elektrolyts 10 erfolgt eine Verstromung von Anodengas 6 und Kathodengas 7, bei welcher Wasserstoff mit Sauerstoff umgesetzt wird und dabei elektrische Energie freigesetzt wird. Die Brennstoffzelle 2 besteht üblicherweise aus einem Stapel von Brennstoffzellenelementen oder Brennstoffzellenplatten. In den Fig. 1 bis 4 ist lediglich eine Abschlussplatte 11 dargestellt. Die Abschlussplatte 11 weist einen Anodenabgasausgang 12, aus dem wasserstoffhaltiges Anodenabgas 13 aus der Brennstoffzelle 2 austritt, sowie einen Kathodenabgasausgang 14 auf, aus dem sauerstoffhaltiges Kathodenabgas 15 aus der Brennstoffzelle 2 austritt. Ferner weist die Brennstoffzelle 2 einen Anodengaseingang 16, durch den das Anodengas 6 in die Brennstoffzelle 2 eintritt, sowie einen Kathodengaseingang 17 auf, durch den das Kathodengas 7 in die Brennstoffzelle 2 eintritt. An wenigstens einem elektrischen Anschluss 18 ist der Strom 5 an der Brennstoffzelle 2 abgreifbar.

Als Kathodengas wird vorzugsweise Luft verwendet. Als Anodengas kann reines Wasserstoffgas, z.B. aus einem Wasserstofftank, oder ein wasserstoffhaltiges Synthesegas verwendet werden, das z.B. aus einem sauerstoffhaltigen Oxidatorgas und einem Kohlenwasserstoff-Brennstoff generiert wird.

Zur Versorgung der Brennstoffzelle 2 mit Kathodengas ist das Brennstoffzellensystem 1 beispielsweise mit einer Kathodengaszuführung 37 ausgestattet, die an eine Eingangsseite der Brennstoffzelle 2 angeschlossen ist. Die Kathodengaszuführung 37 weist eine Kathodengasleitung 38 auf, die an den Kathodengaseingang 17 angeschlossen ist und die eine Fördereinrichtung 39, z.B. ein Gebläse, enthält.

Der Restgasbrenner 3 ist bezüglich der anodenseitigen und kathodenseitigen Gasströme stromab der Brennstoffzelle 2 angeordnet. Der Restgasbrenner 3 dient zum Verbrennen des Anodenabgases 13 und des Kathodenabgases 15. Hierzu weist der Restgasbrenner 3 einen Anodenabgaseingang 19 auf, durch den Anodenabgas 13 in einen Anodenabgaspfad 20 des Restgasbrenners 3 eintreten kann. Des Weiteren weist der Restgasbrenner 3 einen Kathodenabgaseingang 21 auf, durch den Kathodenabgas 15 in einen Kathodenabgaspfad 22 des Restgasbrenners 3 eintreten kann.

Im Restgasbrenner 3 ist ein Raum 23 ausgebildet, in den das Kathodenabgas 15 durch den Kathodenabgaspfad 22 und das Anodenabgas 13 durch den Anodenabgaspfad 20 eintreten kann. Die Funktion des Raums 23 wird weiter unten noch näher erläutert werden.

Der Restgasbrenner 3 enthält außerdem einen Oxidationskatalysator 24. Erst stromab des Oxidationskatalysators 24 tritt Brennerabgas 25 aus dem Restgasbrenner 3 aus. Der Katalysator 24 schließt sich im Restgasbrenner 3 stromab an den Raum 23 an. Der Katalysator 24 kann grundsätzlich auf beliebige Weise hergestellt sein. Beispielsweise kann er einen Träger aus Keramik oder aus Metall aufweisen und mit einer katalytischen Beschichtung versehen sein, die beispielsweise Platin, Rhodium und/oder Palladium aufweist. Alternativ kann der Katalysator 24 unmittelbar aus dem Katalysatormaterial bestehen. Das erfindungsgemäße Brennstoffzellensystem 1 baut im Hinblick auf den Restgasbrenner 3 mit integriertem Katalysator 24 vergleichsweise kompakt.

An den Restgasbrenner 3 kann vorzugsweise eine Kühlgaszuführung 26 angeschlossen sein. Die Kühlgaszuführung 26 umfasst eine Kühlgasleitung 27, in der eine Fördereinrichtung 28, z.B. eine Kühlgaspumpe oder ein Kühlgasgebläse, angeordnet ist. Die Kühlgasleitung 27 ist an die Eingangsseite, bevorzugt an die Kathodenseite des Restgasbrenners 3 angeschlossen. Im vorliegenden Fall kommuniziert die Kühlgasleitung 27 mit dem Kathodenabgaspfad 22. Bevorzugt wird als Kühlgas ein sauerstoffhaltiges Gas, insbesondere Luft, verwendet.

Ferner ist eine Steuerung 29 vorgesehen, die einerseits mit der Kühlgaszuführung 26 und andererseits mit einer Sensorik 30 verbunden ist. Vorzugsweise ist die Steuerung 29 wie hier außerdem mit der Kathodengaszuführung 37 verbunden. Die Sensorik 30 dient zum Ermitteln einer Temperatur des Oxidationskatalysators 24. Hierzu kann die Sensorik 30 zumindest einen Temperatursensor 31 aufweisen. Besagter Temperatursensor 31 kann am Katalysatoreingang, im Katalysator 24, am Katalysatorausgang oder stromab des Katalysators 24 angeordnet sein. Über entsprechende, nicht näher bezeichnete Signalleitungen erhält die Steuerung 29 mit der Temperatur des Katalysators 24 korrelierende Signalwerte. Die Sensorik 30 kann außerdem mit einem Flammensensor 32 ausgestattet sein, der im Raum 23 angeordnet ist und mit dessen Hilfe das Vorhandensein bzw. das Fehlen einer Flamme im Raum 23 feststellbar ist. Die Steuerung 29 ist z.B. mit der Fördereinrichtung 28 der Kühlgaszuführung 26 verbunden. Darüber hinaus kann die Steuerung 29 auch mit einer Zündeinrichtung 33 verbunden sein. Ebenso kann die Steuerung 29 mit der Fördereinrichtung 39 der Kathodengaszuführung 37 verbunden sein. Die Steuerung 29 kann durch entsprechende Steuersignale die Fördereinrichtungen 28, 39 sowie die Zündeinrichtung 33 betätigen. Entsprechende Steuerleitungen sind nicht bezeichnet. Die Steuerung 29 kann zur Realisierung einer Temperaturregelung für den Katalysator 24 ausgestaltet sein.

Darüber hinaus kann die Sensorik 30 zumindest eine Lambda-Sonde 40 aufweisen. Für die jeweilige Lambda-Sonde 40 bestehen grundsätzlich die gleichen Anordnungsmöglichkeiten wie für den wenigstens einen Temperatursensor 31. Dementsprechend sind in den Figuren zur vereinfachten Darstellung die Bezugszeichen 31 für den Temperatursensor und 40 für die Lambda-Sonde jeweils zur Kennzeichnung der gleichen Komponenten verwendet, so dass es sich bei der jeweiligen Komponente wahlweise um einen Temperatursensor 31 oder um eine Lambda-Sonde 40 handeln kann. Die jeweilige Lambda-Sonde 40 ist über entsprechende, nicht näher bezeichnete Signalleitungen ebenfalls mit der Steuerung 29 verbunden.

Der Wärmeübertrager 4 ist einerseits in den Strom der Brennerabgase 25 und andererseits in einen Strom eines geeigneten Wärmeübertragermediums 34 eingebunden. Der Wärmeübertrager 4 ermöglicht dabei in üblicher Weise eine Wärmeübertragung auf das Wärmeübertragermedium 34 ohne einen Fluidaustausch zwischen dem Wärmeübertragermedium 34 und dem Brennerabgas 25. Beispielsweise handelt es sich beim Wärmeübertragermedium 34 um ein Prozessmedium des Brennstoffzellensystems 1, z.B. um das der Brennstoffzelle 2 zugeführte Kathodengas 7 und/oder um das dem oben genannten Reformer zugeführte Oxidatorgas und/oder um dem Reformer bzw. dem Oxidatorgas zugeführtes Wasser. Ebenso kann es sich beim Wärmeübertragermedium 34 um die Kühlflüssigkeit eines Kühlkreises des mit dem Brennstoffzellensystem 1 ausgestatteten Fahrzeugs handeln.

Bei einer ersten Variante der in den Fig. 1 bis 4 gezeigten Ausführungsformen dient der Raum 23 vorwiegend als Brennraum 35, in dem während des Betriebs des Brennstoffzellensystems 1 die Verbrennung von Anodenabgas mit Kathodenabgas, also die Umsetzung von Wasserstoff stattfindet. Bei dieser Ausführungsform ist der Oxidationskatalysator 24 so ausgelegt, dass darin jedenfalls eine Umsetzung von Kohlenmonoxid, das im Verbrennungsabgas des Brennraums 35 enthalten ist, in Kohlendioxid stattfindet. Es ist klar, dass im Katalysator 24 auch eine Umsetzung von restlichem Wasserstoff oder von restlichen Kohlenwasserstoffen erfolgt. Der Katalysator 24 dient hierbei vorwiegend bzw. ausschließlich zur Reduzierung der Schadstoffemissionen. Diese erste Alternative eignet sich insbesondere für die Verwendung bei einer Brennstoffzelle 2, die als Hochtemperatur-Brennstoffzelle, insbesondere als Festkörper-Brennstoffzelle (sogenannte "SOFC"-Brennstoffzelle) ausgestaltet ist. Die Arbeitstemperatur einer derartigen Hochtemperatur-Brennstoffzelle liegt im Maximum bei etwa 850° C. Die Abgastemperaturen dieses Brennstoffzellentyps sind ausreichend hoch, um im Brennraum 35 eine stabile Verbrennungsreaktion erzielen zu können.

Bei einer zweiten Alternativen der in den Fig. 1 bis 4 gezeigten Ausführungsformen kann der Raum 23 vorwiegend als Mischraum 36 dienen. Im Mischraum 36 erfolgt eine Durchmischung des darin eintretenden Anodenabgases 13 mit dem ebenfalls darin eintretenden Kathodenabgas 15. Der Oxidationskatalysator 24 ist nun dahingehend ausgelegt, dass darin während des Betriebs des Brennstoffzellensystems 1 die Verbrennung von Anodenabgas 13 mit Kathodenabgas 15, also die Umsetzung des Wasserstoffs und - soweit vorhanden - des Kohlenmonoxids stattfindet. Bei dieser zweiten Variante, arbeitet der Restgasbrenner 3 katalytisch bzw. ist der Restgasbrenner 3 als katalytischer Brenner ausgestaltet. Diese Alternative eignet sich in besonderer Weise für die Verwendung bei einer Brennstoffzelle 2, die als Niedertemperatur-Brennstoffzelle ausgestaltet ist. Beispielsweise handelt es sich hierbei um eine Brennstoffzelle 2, die mit einer Protonenaustauschmembran bzw. mit einer polymeren Elektrolytmembran arbeitet, sogenannte "PEM"-Brennstoffzelle. Die Arbeitstemperatur einer derartigen Niedertemperatur-Brennstoffzelle liegt im Maximum bei etwa 80° bis 150° C.

Bekannte Niedertemperatur-Brennstoffzellen, insbesondere PEM-Brennstoffzellen, sind gegenüber Kohlenmonoxid extrem empfindlich. Dementsprechend ist einem nicht gezeigten Reformer zur Erzeugung des Anodengases 6 üblicherweise eine CO-Reinigungseinrichtung nachgeschaltet, um das beim Reformerprozess entstehende Kohlenmonoxid dem Synthesegas zu entziehen, damit dieses als weitgehend von Kohlenmonoxid befreites Anodengas 6 der Brennstoffzelle 2 zugeführt werden kann.

Des Weiteren ist es üblich, bei einer Niedertemperatur-Brennstoffzelle, insbesondere bei einer PEM-Brennstoffzelle, das Kathodengas 7 mit einem relativ hohen Anteil an Wasserdampf zu versehen. Das Wasser unterstützt den Brennstoffzellenprozess am Elektrolyt 10. Dementsprechend kann gemäß den Fig. 1 bis 3 das Brennstoffzellensystem 1 optional mit einer Einspeiseinrichtung 41 ausgestattet sein, mit deren Hilfe Wasserdampf in das Kathodengas 7 einbringbar ist. Die Einspeiseinrichtung 41 ist hierzu beispielsweise stromauf des Kathodengaseingangs 17 in der Kathodengasleitung 38 angeordnet. Für den Verbrennungsprozess im Restgasbrenner 3, insbesondere für den Fall, dass der Restgasbrenner 3 als katalytischer Brenner betrieben wird, ist ein hoher Wasseranteil im Gemisch unerwünscht. Dementsprechend kann optional eine Entnahmeeinrichtung 42 vorgesehen sein. Mit Hilfe der Entnahmeeinrichtung 42 kann dem Kathodenabgas 15 Wasserdampf entzogen werden. Vorzugsweise ist die Entnahmeeinrichtung 42 hierzu in einer Kathodenabgasleitung 43 angeordnet, die den Kathodenabgasausgang 14 der Brennstoffzelle 2 mit dem Kathodenabgaseingang 21 des Restgasbrenners 3 verbindet. Zwischen der Entnahmeeinrichtung 42 und der Einspeiseinrichtung 41 kann eine Wirkverbindung 44 bestehen, die hier durch eine unterbrochene Linie angedeutet ist. Durch diese Wirkverbindung 44 kann der mit Hilfe der Entnahmeeinrichtung 42 dem Kathodenabgas 15 entnommene Wasserdampf der Einspeiseinrichtung 41 zum Einspeisen in das Kathodengas 7 zugeführt werden. Diese Wirkverbindung 44 kann eine Fördereinrichtung für Wasser bzw. Wasserdampf enthalten. Besonders vorteilhaft ist eine Ausführungsform, bei welcher die Einspeiseinrichtung 41 und die Entnahmeeinrichtung 42 eine bauliche Einheit bilden, so dass die Wirkverbindung 44 im Inneren einer derartigen kombinierten Einspeis- und Entnahmeeinrichtung angeordnet ist. Die Verwendung einer derartigen kombinierten Einspeis- und Entnahmeeinrichtung ist beispielsweise durch einen entsprechenden Verlauf der Kathodenabgasleitung 43 und/oder der Kathodengasleitung 38 realisierbar.

Zum Starten der Verbrennungsreaktion im Raum 23, insbesondere zum Aktivieren des Katalysators 24, vorzugsweise bei der zweiten Variante, kann die Steuerung 29 die Zündeinrichtung 33 betätigen. Über den Flammensensor 32 kann die Steuerung 29 überwachen, ob die erwünschte Verbrennungsreaktion ordnungsgemäß abläuft. Bei der zweiten Variante dient der Raum 23 während des Startvorgangs als Brennraum 35. Sobald der Katalysator 24 seine Starttemperatur erreicht hat, "wandert" die Verbrennungsreaktion in den Katalysator 24. Anschließend dient der Raum 23 dann als Mischraum 36. Über die Sensorik 30 überwacht die Steuerung 29 die Temperatur des Katalysators 24. Bei beiden Alternativen ist es wünschenswert, eine Überhitzung des Katalysators 24 zu vermeiden. Die Steuerung 29 kann nun in Abhängigkeit der Temperatur des Oxidationskatalysators 24 die Kühlgaszuführung 26 betätigen. Nähert sich die Temperatur des Katalysators 24 einem kritischen oberen Temperaturbereich, die z.B. bei etwa 1.000°C liegen kann, kann die Steuerung 29 die Zuführung von Kühlgas in den Raum 23 einschalten bzw. verstärken, wodurch sich die Wasserstoffkonzentration im Raum 23 reduziert. Alternativ oder zusätzlich kann die Steuerung 29 auch den Volumenstrom zur Versorgung der Brennstoffzelle 2 mit Kathodengas 7 erhöhen, sofern das Betriebsfenster der Brennstoffzelle 2 dies zulässt. Durch die erhöhte Kathodengasmenge erhöht sich auch die dem Restgasbrenner 3 zugeführte Kathodenabgasmenge, was ebenfalls eine Kühlung des Restgasbrenners 3 bzw. des Katalysators 24 bewirkt. In der Folge nimmt die Temperatur im Brennraum 35 bzw. im Katalysator 24 ab. Kühlt sich der Katalysator 24 zu stark ab, kann durch Reduzieren bzw. Ausschalten der Kühlgaszumischung bzw. durch Reduzieren der Kathodengasversorgung der Brennstoffzelle 2 eine entsprechende Temperaturerhöhung herbeigeführt werden.

Die Steuerung 29 kann grundsätzlich so ausgestaltet sein, dass sie die Temperaturregelung des Restgasbrenners 3 bzw. des Katalysators 24 zunächst nur durch eine entsprechende Betätigung der Kathodengaszuführung 37 bzw. deren Fördereinrichtung 39 realisiert, sofern dies das aktuelle Betriebsfenster der Brennstoffzelle 2 zulässt. Erst dann, wenn über die Erhöhung des Kathodengasvolumenstroms die benötigte Kühlleistung nicht erzielbar ist, aktiviert die Steuerung 29 die Kühlgaszuführung 26, um durch die Zuführung von Kühlgas die erforderliche Abkühlung zu realisieren.

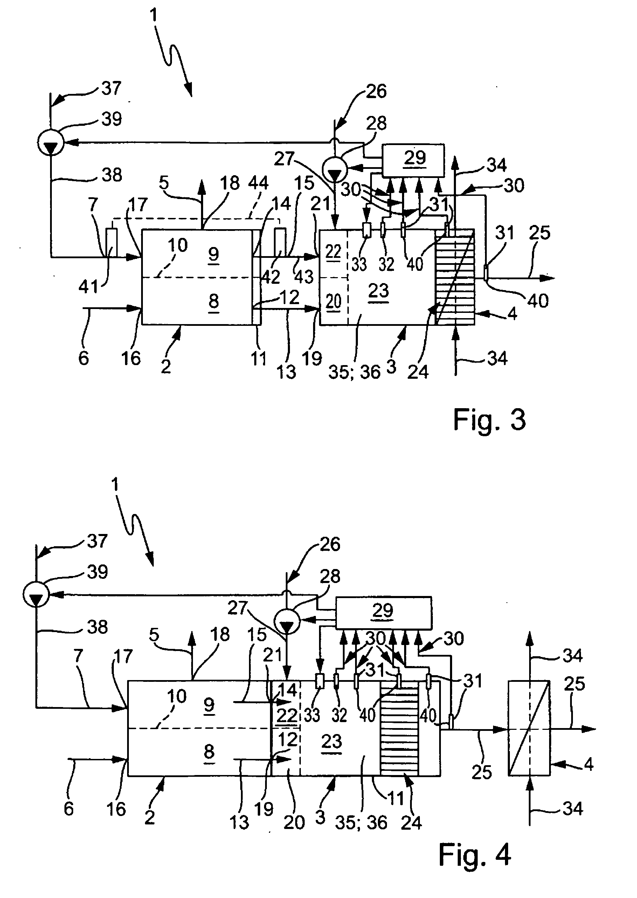

Bei den in den Fig. 1 und 4 gezeigten Ausführungsformen ist der Wärmeübertrager 4 bezüglich der Abgasströmung stromab des Restgasbrenners 3 angeordnet und bildet diesbezüglich ein separates Bauteil. Im Unterschied dazu ist der Wärmeübertrager 4 bei den Ausführungsformen der Fig. 2 und 3 in den Restgasbrenner 3 integriert. Zweckmäßig bildet dabei der Wärmeübertrager 4 einen ausgangsseitigen Abschluss des Restgasbrenners 3. Das Brennstoffzellensystem 1 baut somit bezüglich dieser Komponenten vergleichsweise kompakt.

Bei der in Fig. 2 gezeigten Ausführungsform ist der Wärmeübertrager 4 im Restgasbrenner 3 stromab des Katalysators 24 angeordnet. Im Unterschied dazu ist bei der Ausführungsform gemäß Fig. 3 der Oxidationskatalysator 24 in den Wärmeübertrager 4 integriert. Erreicht wird dies durch eine katalytisch aktive Beschichtung des Wärmeübertragers 4 innerhalb des dem Brennerabgas 25 zugeordneten Fluidpfads. Bei dieser Ausführungsform baut der Restgasbrenner 3 und somit das damit ausgestattete Brennstoffzellensystem 1 besonders kompakt.

Bei den Ausführungsformen der Fig. 1 bis 3 ist der Restgasbrenner 3 im Hinblick auf die Brennstoffzelle 2 als separates Bauteil konzipiert und dementsprechend stromab der Brennstoffzelle 2 angeordnet. Bei der in Fig. 4 gezeigten Ausführungsform ist der Restgasbrenner 3 an die Brennstoffzelle 2 angebaut und zwar an deren Ausgangsseite bzw. Abströmseite. Dementsprechend ist der Restgasbrenner 3 auch bei dieser Ausführungsform stromab der Brennstoffzelle 2 angeordnet. Besonders vorteilhaft ist bei der Ausführungsform gemäß Fig. 4, dass der Restgasbrenner 3 die Abschlussplatte 11 der Brennstoffzelle 2 bildet. Hierdurch lassen sich die Brennstoffzellenabgase 13, 15 intern dem Restgasbrenner 3 zuführen. Das Brennstoffzellensystem 1 baut dadurch extrem kompakt. Es ist klar, dass die in Fig. 4 gezeigte Ausführungsform ebenso mit den Besonderheiten der Ausführungsformen der Fig. 2 und 3 kombinierbar ist. Dementsprechend kann auch bei der Ausführungsform gemäß Fig. 4 der Wärmeübertrager 4 in den Restgasbrenner 3 integriert sein. Darüber hinaus kann auch der Katalysator 24 in den Wärmeübertrager 4 integriert sein.

## Patentansprüche

1. Brennstoffzellensystem, insbesondere in einem Kraftfahrzeug,
- mit einer Brennstoffzelle (2) zum Generieren von elektrischem Strom (5) aus wasserstoffhaltigem Anodengas (6) und sauerstoffhaltigem Kathodengas (7),
- mit einem stromab der Brennstoffzelle (2) angeordneten Restgasbrenner (3) zum Verbrennen von wasserstoffhaltigem Anodenabgas (13) mit sauerstoffhaltigem Kathodenabgas (15), der einen Brennraum (35) enthält, in dem im Betrieb des Brennstoffzellensystems (1) die Verbrennung von Anodenabgas (13) mit Kathodenabgas (15) stattfindet,
- mit einem Oxidationskatalysator (24) zur Reduzierung von Schadstoffemissionen,
**dadurch gekennzeichnet,**
**dass** der Oxidationskatalysator (24) stromab des Brennraums (35) im Restgasbrenner (3) angeordnet ist, derart, dass im Betrieb des Brennstoffzellensystems (1) Brennerabgas (25) stromab des Oxidationskatalysators (24) aus dem Restgasbrenner (3) austritt, und dass der Oxidationskatalysator (24) so ausgestaltet ist, dass im Betrieb des Brennstoffzellensystems (1) im Oxidationskatalysator (24) eine Umsetzung von im Verbrennungsabgas des Brennraums (35) enthaltenen Kohlenmonoxid in Kohlendioxid erfolgt.

2. Brennstoffzellensystem nach Anspruch 1,
**dadurch gekennzeichnet,**
**dass** die Brennstoffzelle (2) als Hochtemperatur-Brennstoffzelle ausgestaltet ist.

3. Brennstoffzellensystem nach Anspruch 1 oder 2,
**dadurch gekennzeichnet,**
- **dass** an den Restgasbrenner (3) eingangsseitig eine Kühlgaszuführung (26) angeschlossen ist,
- **dass** eine Sensorik (30) zum Ermitteln der Temperatur des Oxidationskatalysators (24) vorgesehen ist,
- **dass** eine mit der Kühlgaszuführung (26) und mit der Sensorik (30) verbundene Steuerung (29) zum Betreiben der Kühlgaszuführung (26) in Abhängigkeit der Temperatur des Oxidationskatalysators (24) vorgesehen ist.

4. Brennstoffzellensystem nach einem der Ansprüche 1 bis 3,
**dadurch gekennzeichnet,**
- **dass** an die Brennstoffzelle (2) eingangsseitig eine Kathodengaszuführung (37) angeschlossen ist,
- **dass** eine Sensorik (30) zum Ermitteln der Temperatur des Oxidationskatalysators (24) vorgesehen ist,
- **dass** eine mit der Kathodengaszuführung (37) und mit der Sensorik (30) verbundene Steuerung (29) zum Betreiben der Kathodengaszuführung (37) in Abhängigkeit der Temperatur des Oxidationskatalysators (24) vorgesehen ist.

5. Brennstoffzellensystem nach den Ansprüchen 3 und 4,
**dadurch gekennzeichnet,**
**dass** die Steuerung (29) so ausgestaltet ist, dass sie beim Betätigen der Kühlgaszuführung (26) die Betätigung der Kathodengaszuführung (37) berücksichtigt.

6. Brennstoffzellensystem nach einem der Ansprüche 1 bis 5,
**dadurch gekennzeichnet,**
- **dass** stromab des Restgasbrenners (3) ein Wärmeübertrager (4) zur Wärmeübertragung auf ein Wärmeübertragungsmedium (34) angeordnet ist, oder
- **dass** in den Restgasbrenner (3) ein Wärmeübertrager (4) zur Wärmeübertragung auf ein Wärmeübertragungsmedium (34) integriert ist.

7. Brennstoffzellensystem nach Anspruch 6,
**dadurch gekennzeichnet,**
- **dass** der Wärmeübertrager (4) stromab des Oxidationskatalysators (24) im Restgasbrenner (3) angeordnet ist, oder
- **dass** der Oxidationskatalysator (24) in Form einer katalytisch aktiven Beschichtung in den Wärmeübertrager (4) integriert ist.

8. Brennstoffzellensystem nach einem der Ansprüche 1 bis 7,
**dadurch gekennzeichnet,**
**dass** der Restgasbrenner (3) eine Abschlussplatte (11) der Brennstoffzelle (2) bildet.

9. Restgasbrenner für ein Brennstoffzellensystem (1) zum Verbrennen von wasserstoffhaltigem Anodenabgas (13) einer Brennstoffzelle (2) mit sauerstoffhaltigem Kathodenabgas (15) der Brennstoffzelle (2), mit einem Brennraum (35), in dem im Betrieb des Brennstoffzellensystems (1) die verbrennung von Anodenabgas (13) mit Katodenabgas (15) stattfindet, **gekennzeichnet durch** einen darin stromab des Brennraums (35) angeordneten Oxidationskatalysator (24) zur Reduzierung von Schadstoffemissionen, derart, dass im Betrieb des Brennstoffzellensystems (1) Brennerabgas (25) stromab des Oxidationskatalysators (24) aus dem Restgasbrenner (3) austritt und im Oxidationskatalysator (24) eine Umsetzung von Verbrennungsabgas des Brennraums (35) enthaltenen Kohlenmonoxid in Kohlendioxid erfolgt.

10. Restgasbrenner nach Anspruch 9,
**gekennzeichnet durch** die kennzeichnenden Merkmale wenigstens eines der Ansprüche 2 bis 8.

## Claims

1. A fuel cell system, more preferably in a motor vehicle,
- with a fuel cell (2) for generating electric current (5) from hydrogen-containing anode gas (6) and oxygen-containing cathode gas (7),
- with a residual gas burner (3) for the burning of hydrogen-containing anode waste gas (13) with oxygen-containing cathode waste gas (15) arranged downstream of the fuel cell (2), which contains a combustion chamber (35) in which in operation of the fuel cell system (1) the burning of anode waste gas (13) with cathode waste gas (15) takes place,
- with an oxidation catalytic converter (24) for reducing pollutant emissions,
**characterized in that** the oxidation catalytic converter (24) is arranged in the residual gas burner (3) downstream of the combustion chamber (35) in such a manner that in operation of the fuel cell system (1) burner waste gas (25) exits the residual gas burner (3) downstream of the oxidation catalytic converter (24) and **in that** the oxidation catalytic converter (24) is so designed that in operation of the fuel cell system (1) conversion of carbon monoxide contained in the combustion waste gas of the combustion chamber (35) into carbon dioxide takes place in the oxidation catalytic converter (24).

2. The fuel cell system according to Claim 1, **characterized in that** the fuel cell (2) is designed as high-temperature fuel cell.

3. The fuel cell system according to Claim 1 or 2, **characterized**
- **in that** a cooling gas feed (26) is connected to the residual gas burner (3) on the inlet side,
- **in that** a sensor device (30) for determining the temperature of the oxidation catalytic converter (24) is provided,
- **in that** a control (29) for operating the cooling gas feed (26) as a function of the temperature of the oxidation catalytic converter (24) connected to the cooling gas feed (26) and to the sensor device (30) is provided.

4. The fuel cell system according to any one of the Claims 1 to 3, **characterized**
- **in that** a cathode gas feed (37) is connected to the fuel cell (2) on the inlet side,
- **in that** a sensor device (30) for determining the temperature of the oxidation catalytic converter (24) is provided,
- **in that** a control (29) for operating the cathode gas feed (37) as a function of the temperature of the oxidation catalytic converter (24) connected to the cathode gas feed (37) and to the sensor device (30) is provided.

5. The fuel cell system according to the Claims 3 and 4, **characterized in that** the control (29) is designed so that on actuating the cooling gas feed (26) it takes into account the actuation of the cathode gas feed (37).

6. The fuel cell system according to any one of the Claims 1 to 5, **characterized**
- **in that** downstream of the residual gas burner (3) a heat transfer device (4) for the heat transfer to a heat transfer medium (34) is arranged, or
- **in that** in the residual gas burner (3) a heat transfer device (4) for the heat transfer to a heat transfer medium (34) is integrated.

7. The fuel cell system according to Claim 6, **characterized**
- **in that** the heat transfer device (4) is arranged in the residual gas burner (3) downstream of the oxidation catalytic converter (24), or
- **in that** the oxidation catalytic converter (24) is integrated in the heat transfer device (4) in form of a catalytically active coating.

8. The fuel cell system according to any one of the Claims 1 to 7, **characterized in that** the residual gas burner (3) forms a termination plate (11) of the fuel cell (2).

9. A residual gas burner for a fuel cell system (1) for burning hydrogen-containing anode waste gas (13) of a fuel cell (2) with oxygen-containing cathode waste gas (15) of the fuel cell (2), with a combustion chamber (35), in which in operation of the fuel cell system (1) the burning of anode waste gas (13) with cathode waste gas (15) takes place, **characterized by** an oxidation catalytic converter (24) for the reduction of pollutant emissions arranged therein downstream of the combustion chamber (35) in such a manner that in operation of the fuel cell system (1) burner waste gas (25) exits the residual gas burner (3) downstream of the oxidation catalytic converter (24) and in the oxidation catalytic converter (24) a conversion of carbon monoxide contained in the combustion waste gas of the combustion chamber (35) into carbon dioxide takes place.

10. A residual gas burner according to Claim 9, **characterized by** the characterising features of at least one of the Claims 2 to 8.

## Revendications

1. Système de cellules de combustible, en particulier sur un véhicule automobile, comprenant
- une cellule de combustible (2) pour générer du courant électrique (5) à partir de gaz d'anode (6) contenant de l'hydrogène et de gaz de cathode (7) contenant de l'oxygène,
- un brûleur à gaz résiduel (3) disposé en aval de la cellule de combustible (2) pour la combustion de gaz d'échappement d'anode (13) contenant de l'hydrogène avec du gaz d'échappement de cathode (15) contenant de l'oxygène, qui contient un espace de combustion (35) dans lequel a lieu la combustion de gaz d'échappement d'anode (13) avec des gaz d'échappement de cathode (15) pendant le fonctionnement du système de cellules de combustible (1),
- un catalyseur à oxydation (24) pour la réduction d'émissions polluantes,
**caractérisé en ce que**
le catalyseur à oxydation (24) est disposé en aval de l'espace de combustion (35) dans le brûleur à gaz résiduel (3), de telle sorte que des gaz d'échappement de brûleur (25) sortent en aval du catalyseur à oxydation (24) du brûleur à gaz résiduel (3) pendant le fonctionnement du système de cellules de combustible (1), et **en ce que** le catalyseur à oxydation (24) est conçu de telle sorte qu'une transformation de monoxyde de carbone contenu dans les gaz d'échappement de combustion de l'espace de combustion (35) en dioxyde de carbone a lieu pendant le fonctionnement du système de cellules de combustible (1) dans le catalyseur à oxydation (24).

2. Système de cellules de combustible selon la revendication 1,
**caractérisé en ce que**
la cellule de combustible (2) est conçue comme cellule de combustible à haute température.

3. Système de cellules de combustible selon la revendication 1 ou 2,
**caractérisé en ce que**
- une arrivée de gaz réfrigérant (26) est raccordée côté entrée au brûleur à gaz résiduel (3),
- **en ce qu'**un capteur (30) est prévu pour déterminer la température du catalyseur à oxydation (24),
- **en ce qu'**une commande (29) reliée à l'arrivée de gaz réfrigérant (26) et au capteur (30) est prévue pour utiliser l'arrivée de gaz réfrigérant (26) en fonction de la température du catalyseur à oxydation (24).

4. Système de cellules de combustible selon l'une quelconque des revendications 1 à 3,
**caractérisé en ce que**
- une arrivée de gaz de cathode (37) est raccordée côté entrée à la cellule de combustible (2),
- **en ce qu'**un capteur (30) est prévu pour déterminer la température du catalyseur à oxydation (24),
- **en ce qu'**une commande (29) reliée à l'arrivée de gaz de cathode (37) et au capteur (30) est prévue pour utiliser l'arrivée de gaz de cathode (37) en fonction de la température du catalyseur à oxydation (24).

5. Système de cellules de combustible selon les revendications 3 et 4,
**caractérisé en ce que**
- la commande (29) est conçue de telle sorte qu'elle prend en compte l'actionnement de l'arrivée de gaz de cathode (37) lors de l'actionnement de l'arrivée de gaz réfrigérant (26).

6. Système de cellules de combustible selon l'une quelconque des revendications 1 à 5,
**caractérisé en ce que**
- un échangeur de chaleur (4) pour la transmission de chaleur à un milieu de transmission de chaleur (34) est disposé en aval du brûleur à gaz résiduel (3), ou
- **en ce qu'**un échangeur de chaleur (4) pour la transmission de chaleur à un milieu de transmission de chaleur (34) est intégré dans le brûleur à gaz résiduel (3).

7. Système de cellules de combustible selon la revendication 6,
**caractérisé en ce que**
- l'échangeur de chaleur (4) est disposé en aval du catalyseur à oxydation (24) dans le brûleur à gaz résiduel (3), ou
- **en ce que** le catalyseur à oxydation (24) est intégré dans l'échangeur de chaleur (4) sous la forme d'un revêtement actif au plan catalytique.

8. Système de cellules de combustible selon l'une quelconque des revendications 1 à 7,
**caractérisé en ce que**
le brûleur à gaz résiduel (3) forme une plaque de fermeture (11) de la cellule de combustible (2).

9. Brûleur à gaz résiduel pour un système de cellules de combustible (1) pour la combustion de gaz d'échappement d'anode (13) contenant de l'hydrogène d'une cellule de combustible (2) avec des gaz d'échappement de cathode (15) contenant de l'oxygène de la cellule de combustible (2), comprenant un espace de combustion (35), dans lequel a lieu la combustion des gaz d'échappement d'anode (13) avec des gaz d'échappement de cathode (15) pendant le fonctionnement du système de cellules de combustible (1), **caractérisé par** un catalyseur à oxydation (24) disposé à l'intérieur en aval de l'espace de combustion (35) pour la réduction d'émissions polluantes, de telle sorte que des gaz d'échappement de brûleur (25) sortent du brûleur à gaz résiduel (3) en aval du catalyseur à oxydation (24) pendant le fonctionnement du système de cellules de combustible (1) et une transformation de monoxyde de carbone contenant des gaz d'échappement de combustion de l'espace de combustion (35) en dioxyde de carbone a lieu dans le catalyseur à oxydation (24).

10. Brûleur à gaz résiduel selon la revendication 9,
**caractérisé par** les caractéristiques de nouveauté d'au moins l'une des revendications 2 à 8.
